# EUROPEAN PATENT APPLICATION

(11) **EP 4 592 177 A1**
(43) Date of publication of application: **30.07.2025**
(21) Application number: 25150541.8
(22) Date of filing: 07.01.2025
(51) Int. Cl.: B64D 11/00, B64D 11/06, B64D 45/00

(54) **SYSTEMS AND METHODS FOR MONITORING STORAGE PROVISIONS IN A CONVEYANCE**

(30) Priority: 24.01.2024 IN 202441004928; 16.12.2024 US 202418982823
(71) Applicant: B/E Aerospace, Inc., Winston-Salem, NC 27105 (US)
(72) Inventor: R, Bharathkannan, Coimbatore (IN); ANANTHAN, Ajanthan, Kumbakonam (IN); GANESAN, Senthil, Tiruvannamalai (IN); HAKLA, Haytham, Montreal, QC (CA); WILSON, Christopher M., Clemmons, NC (US)
(74) Representative: Dehns

(57) **Abstract**

A system (100) and method for monitoring at least one storage provision (602) in an aircraft has at least one sensor (604) for sensing at least one object positioned in an interior space of the at least one storage provision, at least one indicator (600) associated with the at least one storage provision, and a controller (102) communicatively coupled to the at least one sensor, the at least one indicator, and at least one phase of flight controller (104). The controller has processing circuitry configured to activate the at least one sensor, receive object information from the at least one sensor, receive phase of flight information from the phase of flight controller, and when the object information pertains to at least one sensed object in the at least one storage provision, and the phase of flight information pertains to landing or deboarding of the aircraft, activate the at least one indicator.

## Description

### TECHNICAL FIELD AND BACKGROUND

The present disclosure relates generally to systems and methods for sensing objects and providing alerts, and more particularly, to systems and methods for implementation in a conveyance and configured to activate during a predefined phase of travel, sense the presence of objects in storage provisions, and alert persons to the sensed objects such that the objects are retrieved before exiting the conveyance.

Conveyances such as aircraft include storage provisions for temporary use while on board the conveyance. For example, in an aircraft, storage provisions may be provided for the passengers and the flight crew. Storage provisions may include compartments, closets, shelves, bins, pockets, drawers, etc. The number and type of storage provisions may vary between passenger and crew compartments, as well as between different passenger seating classes. For example, business, first, and super first class seating classes may include a greater number and variety of storage provisions as compared to economy seating classes considering the different seating densities, living spaces, privacy configurations, furniture, and expectation of amenities commensurate with higher fares.

While on board the aircraft or other conveyance, the passengers and crew may utilize the various storage provisions available to them to store personal belongings such as luggage, bags, computer cases, purses, clothing, umbrellas, wallets, passports, keys, jewelry, and electronic devices. While personal belongings may be stored for comfort and convenience, some personal belongings may be required to be stowed in preparation for taxi, takeoff, and landing (TTOL).

At the conclusion of a flight or other mode of travel, the responsibility falls on the passengers and the crew to remember to gather their personal belongings. In some cases, leaving personal belongings behind may be an inconvenience. In other cases, leaving personal belongings behind, such as important and frequently used items such as passports, wallets, purses, keys, computers, and smart phones, is immediately disruptive to the owner. In addition, leaving personal belongings behind places a continuing burden on the crew and carrier to search for, retrieve, secure, communicate, and return the lost items to their owner. When personal belongings are late getting returned, or lost altogether, customer dissatisfaction with the carrier increases.

While reminder systems are known for vehicles, traditional solutions do not operate based on the occupancy state of the vehicle nor the phase of travel, and therefore do not operate in an efficient and power saving manner important for conveyances such as aircraft. In addition, traditional solutions focus on electronic devices such as smart phones, and therefore require reminder systems that are able to establish a communication link with the monitored devices.

Therefore, what is needed is a storage monitoring solution applicable to all types of conveyances, storage provisions, and personal belongings, and which operates in an energy-efficient and customizable manner.

### BRIEF SUMMARY

In one aspect, the inventive concepts according to the present disclosure are directed to a system for monitoring at least one storage provision in a seating area in an aircraft. In embodiments, the system comprises at least one sensor for sensing at least one object positioned in an interior space of the at least one storage provision, at least one indicator associated with the at least one storage provision, and a controller communicatively coupled to the at least one sensor, the at least one indicator, and at least one phase of flight controller. In embodiments, the controller includes processing circuitry configured to activate the at least one sensor, receive object information from the at least one sensor, receive phase of flight information from the phase of flight controller, and when the object information pertains to at least one sensed object in the at least one storage provision, and the phase of flight information pertains to landing or deboarding of the aircraft, activate the at least one indicator.

In some embodiments, the phase of flight controller includes processing circuitry configured to determine a sitting position of a passenger seat positioned in the seating area, determine a fastened state of a seat belt of the passenger seat, and communicate with the controller to provide deboarding phase of flight information when the sitting position of the passenger seat is determined to be upright and the fastened state of the seat belt is determined to be unfastened after having been fastened in preparation for landing.

In some embodiments, the phase of flight controller includes processing circuitry configured to determine a sitting position of a passenger seat positioned in the seating area, activate a fasten seat belt sign in preparation for landing, and communicate with the controller to provide deboarding phase of flight information when the sitting position of the passenger seat is determined to be upright and the fasten seat belt sign is deactivated after having been activated in preparation for landing.

In some embodiments, the phase of flight controller is configured to communicate with the controller when landing gear of the aircraft is deployed to provide landing phase of flight information to the controller.

In some embodiments, the phase of flight controller is configured to communicate with the controller when a crew announcement is made pertaining to landing to provide landing phase of flight information to the controller.

In some embodiments, the phase of flight controller includes processing circuitry configured to determine a sitting position of a passenger seat positioned in the seating area, determine a fastened state of a seat belt of the passenger seat, and communicate with the controller to provide landing phase of flight information when the sitting position of the passenger seat is determined to be upright, the seat belt is determined to be fastened, and aircraft altitude is less than a predefined altitude as indicated on a monitor positioned in the seating area.

In some embodiments, the controller is further configured to activate the at least one sensor when the phase of flight information received by the controller pertains to the landing or the deboarding of the aircraft.

In some embodiments, the system further includes a master control switch communicatively coupled to the controller for activating the at least one sensor and the at least one indicator on demand.

In some embodiments, the seating area is a private area in the aircraft, the at least one storage provision includes at least one of a compartment, a shelf, a drawer, a pocket, and a closet, and the at least one indicator is positioned proximal to at least one of the at least one storage provision and an entrance of the private seating area.

According to another aspect, the inventive concepts according to the present disclosure are directed to a method for monitoring at least one storage provision in an aircraft. In embodiments, the method includes the steps of providing a system including at least one sensor for sensing at least one object positioned in an interior space of the at least one storage provision, at least one indicator associated with the at least one storage provision, and a controller communicatively coupled to the at least one sensor, the at least one indicator, and at least one phase of flight controller of the aircraft. In embodiments, the method further includes the steps of, performed by the controller, activating the at least one sensor, receiving object information from the at least one sensor, receiving phase of flight information from the phase of flight controller of the aircraft, and when the object information pertains to at least one sensed object in the at least one storage provision, and the phase of flight information pertains to landing or deboarding of the aircraft, activating the at least one indicator.

In some embodiments, the method further includes the steps of, performed by the phase of flight controller, determining a sitting position of a passenger seat positioned in the seating area, determining a fastened state of a seat belt of the passenger seat, and communicating with the controller to provide deboarding phase of flight information when the sitting position of the passenger seat is determined to be upright and the fastened state of the seat belt is determined to be unfastened after having been fastened in preparation for landing.

In some embodiments, the method further includes the steps of, performed by the phase of flight controller, determining a sitting position of a passenger seat positioned in the seating area, activating a fasten seat belt sign in preparation for landing, and communicating with the controller to provide deboarding phase of flight information when the sitting position of the passenger seat is determined to be upright and the fasten seat belt sign is deactivated after having been activated in preparation for landing.

In some embodiments, the phase of flight controller is configured to communicate with the controller when landing gear of the aircraft is deployed to provide landing phase of flight information to the controller.

In some embodiments, the phase of flight controller is configured to communicate with the controller when a crew announcement is made pertaining to landing to provide landing phase of flight information to the controller.

In some embodiments, the method further includes the steps of, performed by the phase of flight controller, determining a sitting position of a passenger seat positioned in the seating area, determining a fastened state of a seat belt of the passenger seat and communicating with the controller to provide landing phase of flight information when the sitting position of the passenger seat is determined to be upright, the seat belt is determined to be fastened, and aircraft altitude is less than a predefined altitude as indicated on a monitor positioned in the seating area.

In some embodiments, the method further includes the step of, performed by the controller, activating the at least one sensor when the phase of flight information received by the controller pertains to the landing or the deboarding of the aircraft.

In a further aspect, the inventive concepts according to the present disclosure are directed to a system for monitoring at least one storage provision in a conveyance, for instance an aircraft. In embodiments, the system includes at least one sensor to be positioned with respect to the at least one storage provision in the conveyance and configured to detect at least one object positioned in the at least one storage provision, at least one indicator to be positioned with respect to the at least one storage provision, and a controller communicatively coupled to the at least one sensor and to the at least one indicator. In embodiments, the controller includes processing circuitry configured to receive information from the at least one sensor pertaining to at least one detected object, receive conveyance information pertaining to at least one condition of the conveyance, and activate the at least one indicator when the at least one object is detected and the at least one condition of the conveyance is met.

In some embodiments, the conveyance is an aircraft, the at least one storage provision is associated with an adjustable passenger seat including a seat belt, the at least one condition of the conveyance pertains to a deboarding phase of the aircraft and a state of engagement of the seat belt, and the controller is configured to activate the at least one indicator when the seat position is upright and the state of engagement of the seat belt is disengaged.

In some embodiments, the conveyance is an aircraft, the at least one storage provision is associated with an adjustable passenger seat, the at least one condition of the conveyance pertains to a deboarding phase of the aircraft and a state of engagement of a crew member seat belt, and the controller is configured to activate the at least one indicator when the adjustable passenger seat position is upright and the state of engagement of the crew member seat belt is disengaged.

In some embodiments, the conveyance is an aircraft, the at least one storage provision is associated with an adjustable passenger seat, the at least one condition of the conveyance pertains to a deboarding phase of the aircraft and an operative state of a fasten seat belt sign, and the controller is configured to activate the at least one indicator when the adjustable passenger seat position is upright and the fasten seat belt sign is turned off.

In some embodiments, the conveyance is an aircraft, the at least one condition of the conveyance pertains to a crew command, and the controller is configured to activate the at least one indicator when the crew command is activated.

In some embodiments, the conveyance is an aircraft, the at least one condition of the conveyance pertains to deployment of landing gear of the aircraft, and the controller is configured to activate the at least one indicator when the landing gear is deployed.

In some embodiments, the system further includes a master control switch configured to activate the at least one indicator on demand.

In some embodiments, the at least one storage provision includes at least one of a compartment, a shelf, a drawer, a pocket, and a closet.

In some embodiments, the at least one indicator is positioned proximal to the at least one storage provision.

In some embodiments, the conveyance includes a suite, the at least one storage provision is positioned in the suite, and the at least one indicator includes an indicator positioned at an entrance into the suite.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the inventive concepts disclosed herein may be better understood when consideration is given to the following detailed description thereof. Such description refers to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a block diagram illustrating a system for monitoring storage provisions in a conveyance, in accordance with an example embodiment of this disclosure;
FIG. 2 is a block diagram illustrating a system for monitoring storage provisions in a conveyance, in accordance with another example embodiment of this disclosure;
FIG. 3 is a block diagram illustrating a system for monitoring storage provisions in a conveyance, in accordance with a further example embodiment of this disclosure;
FIG. 4 is a block diagram illustrating a system for monitoring storage provisions in a conveyance, in accordance with a still further example embodiment of this disclosure;
FIG. 5 is a schematic illustration of storage provisions and associated indicators, in accordance with example embodiments of this disclosure;
FIG. 6 is a schematic illustration of storage provisions and associated indicators for a passenger suite in an aircraft, in accordance with example embodiments of this disclosure;
FIG. 7 is a schematic illustration of a crew display for indicating stowage conditions, in accordance with example embodiments of this disclosure; and
FIG. 8 is a schematic illustration of a crew display for indicating stowage conditions and additional information, in accordance with example embodiments of this disclosure.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to systems and methods for monitoring storage provisions in a conveyance such as an aircraft. In use, the systems and methods are configured to detect objects (e.g., personal belongings) temporarily stored in the storage provisions during travel, and alert users to the presence of the stored objects such that the objects are remembered to be retrieved prior to departing the conveyance, for instance when exiting the aircraft. In embodiments, at least one of the monitoring, sensor activation, detection and alerting may correspond to a predefined phase of flight or condition of the conveyance. For instance, the systems and methods may be made active during a landing or deboarding phase of flight to conserve energy. In some embodiments, the sensing portion of the systems and methods may occur throughout the duration of a flight, while the alerting portion of the systems and methods are made active during a particular phase of flight, such as landing and deboarding. In embodiments, at least one indicator is configured to provide the alert, for instance in the form of a visual alert, audible alert, or both.

Advantages of the systems and methods according to the present disclosure include, but are not limited to, a reduction in the number of personal belongings left behind after a flight, a reduction in the search, handling and return efforts of a carrier as they pertain to lost personal belongings, and increased customer experience. The systems and methods according to the present disclosure may be implemented in new and existing (e.g., retro-fit) storage provisions in different seating classes including, but not limited to, business and first class seats, super first class suites, crew quarters, etc.

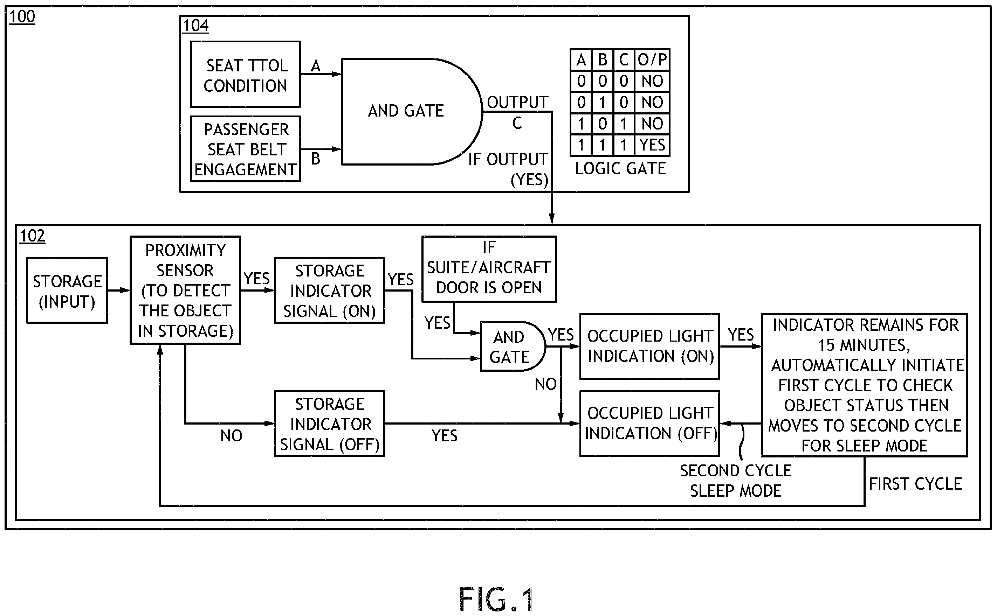

FIG. 1 depicts a block diagram of a system 100 for monitoring storage provisions in a conveyance. In some embodiments, the conveyance is an aircraft such as a passenger airliner. As used herein, the term 'storage provision' refers to any location configured to store items on a temporary basis, for instance closets, compartments (open or closeable), shelves, pockets, drawers, etc. In some embodiments, the storage provisions are associated with a passenger seat or a private area such as a passenger suite. For example, a passenger cabin may be equipped with at least one passenger suite including a passenger seat and furniture including storage provisions. In some embodiments, the suite may have a dedicated suite entrance, for instance an entrance to an aisle. In some embodiments, the storage provisions are associated with a crew area of the aircraft, for instance storage dedicated for use by the flight crew. The term 'user' may therefore refer to a passenger, crew member, etc.

The system 100 generally includes at least one sensor positioned with respect to at least one storage provision in the conveyance. In use, the at least one sensor is configured to sense or detect at least one object (e.g., personal belonging) positioned in the at least one storage provision. In embodiments, the type of sensor utilized may be determined by the type of storage provision. For example, vision based sensors may be utilized with open shelving, proximity sensors may be utilized with closed compartments, weight-based sensors may be used with drawers, etc. The particular sensor type may be based on the storage provision shape and size. For example, a sensor may be positioned above a floor of a drawer or compartment and configured to emit a detecting field to detect lightweight and thin profile objects (e.g., a passport). Intensity patterns may be utilized to identify objects. In another non-limiting example, objects may be sensed utilizing a smart weighting system or strain gauge to detect changes in weight/strain in a bottom plate. Other sensor types may include, but are not limited to, acoustic/ultrasonic sensors, pressure sensors, optical IR arrays, capacitive loop sensors, cameras, light barriers, and Lidar sensors.

In use, the at least one sensor operates to determine the presence or absence of at least one object in the monitored at least one storage provision. The system 100 further includes at least one indicator associated with the at least one sensor. In embodiments, each individual storage provision may include a dedicated indicator configured to indicate to a user the presence or absence of an object in that particular storage provision. For example, a compartment door may be equipped with an indicator in a prominent location readily visible to the user, wherein the indicator includes a light source that may be turned 'on' to indicate the presence of a contained object, or 'off' to indicate the absence of a contained object. In some embodiments, the indicator may be substantially invisible to the user when the indicator is turned off, and becomes visible when the indicator is turned on. In other embodiments, a centralized indicator may be used instead of or in conjunction with a dedicated indicator. For example, in the case of a passenger suite, individual indicators may be positioned on each storage provision and a comprehensive indicator may be positioned at the suite entrance, inside or outside of the suite, readily visible to the passenger when exiting the suite.

The system 100 further includes a controller 102 communicatively coupled to the at least one sensor and to the at least one indicator. In embodiments, the controller 102 includes processing circuitry configured to receive information from the at least one sensor pertaining to at least one detected object, receive conveyance information pertaining to at least one condition of the conveyance, and activate the at least one indicator when the at least one object is detected and the at least one condition of the conveyance is met. In embodiments, the controller is therefore configured to receive inputs from each of the at least one sensor and from a separate system in the conveyance, and based on the received inputs, activate the at least one indicator.

In embodiments, the separate system may be a phase of flight controller 104 configured to determine and/or receive phase of flight information, for instance information pertaining to landing or deboarding of the aircraft. In embodiments, the phase of flight controller includes processing circuitry configured to determine a sitting position of a passenger seat positioned in the seating area, determine a fastened state of a seat belt of the passenger seat, and communicate with the controller to provide deboarding phase of flight information when the sitting position of the passenger seat is determined to be upright and the fastened state of the seat belt is determined to be unfastened after having been fastened in preparation for landing. Thus, the at least one indicator may be made active when an object is sensed in the at least one storage provision and the conditions are met pertaining to the deboarding phase of flight.

In another embodiment, the phase of flight controller 104 includes processing circuitry configured to determine a sitting position of a passenger seat positioned in the seating area, activate a fasten seat belt sign in preparation for landing, and communicate with the controller to provide deboarding phase of flight information when the sitting position of the passenger seat is determined to be upright and the fasten seat belt sign is deactivated after having been activated in preparation for landing. Thus, the at least one indicator may be made active when an object is sensed in the at least one storage provision and the conditions are met pertaining to the landing phase of flight.

In yet another embodiment, the phase of flight controller is configured to communicate with the controller when landing gear of the aircraft is deployed to provide landing phase of flight information to the controller. Thus, the at least one indicator may be made active when an object is sensed and a condition of the aircraft pertaining to landing is met.

In yet another embodiment, the phase of flight controller is configured to communicate with the controller when a crew announcement is made pertaining to landing to provide landing phase of flight information to the controller.

In yet another embodiment, the phase of flight controller includes processing circuitry configured to determine a sitting position of a passenger seat positioned in the seating area, determine a fastened state of a seat belt of the passenger seat, and communicate with the controller to provide landing phase of flight information when the sitting position of the passenger seat is determined to be upright, the seat belt is determined to be fastened, and aircraft altitude is less than a predefined altitude as indicated on a monitor positioned in the seating area. Thus, the at least one indicator may be made active when an object is sensed in the at least one storage provision, and landing conditions are met pertaining to the landing phase of flight.

For energy savings and other advantages, the system 100 may operate when at least one predetermined condition is met. For example, the system 100 may communicate with a separate aircraft system associated with a passenger seat associated with the monitored storage provisions. In some embodiments, it may be unnecessary and energy wasteful to monitor the occupational status of the storage provisions early in the flight considering passengers may retrieve and stow personal belongings many different times during the duration of the flight. In that case, the system 100 may be activated at or near the conclusion of the flight, for instance in preparation for landing, during the landing phase of flight, while taxiing in from the runway, while deboarding the aircraft, etc. To further save energy, the system 100 may communicate with the separate system configured to determine and provide to the controller 102 the phase of flight and/or occupancy state of a particular seat associated with particular storage provisions.

The separate system, for instance the phase of flight controller 104, may be configured to monitor the sitting position of an adjustable passenger seat as well as an engagement state of a seat belt or other passenger restraint associated with the passenger seat. Such monitoring can be used to determine the phase of flight and/or seat occupancy. In some embodiments, when the passenger seat is determined to be in the upright sitting position for TTOL, and when the passenger seat belt is determined to be engaged, the separate system may inform the controller 102 of the same such that the status information about the seat and seat belt can be used for activation purposes by the system 100. In embodiments, the monitoring process may be activated once the passenger seat is in the TTOL position and the seat belt engaged to minimize power consumption, operation time, cost, etc.

Seat belt engagement can be determined using a contact sensor or the like associated with the engageable components of the seat belt. Passenger seats such as business, premium, and super first-class passenger seats can include physical components such as a seat bottom, seat back, leg rest, armrests, headrest, etc. Each physical component may be operative and/or position adjustable by at least one of rotation, translation, extension, etc. Adjustments may be performed by actuators coupled to their respective seat component(s). Each actuator may be categorized depending on its respective adjustable component and function. For example, independent actuators may operate irrespective of any other actuator, and may be primary driving members that initiate seat motion. Actuators may be grouped to coordinate movements of the various seat components, and a passenger seat may include any number of actuators organized in any predetermined actuator grouping(s).

Traditional actuated passenger seats are configured to adjust between different sitting positions. The instructions for transitioning the seat between different sitting positions is commonly referred to as a 'motion plan', and different seat motion plans are executed by a seat controller. Seat motion plans may be provided to transition the seat from any one sitting position to any other sitting position. The activation and coordination of the different seat actuators for completing a seat motion plan is executed via the seat controller. As such, considering the seat controller operates to achieve the different sitting positions, the same seat controller can communicate the current sitting position to the controller of the system 100 such that the sitting position information can be used to selectively activate and deactivate the system 100. The same seat controller can be configured to receive and report the engagement status of the seat belt to the controller. Thus, the seat controller can communicate with the controller to inform the system 100 regarding the position and occupational state of the seat.

A further condition associated with the system 100 activation and deactivation may concern features of the aircraft. For example, the open/closed status of a suite door or the aircraft door may be conveyed to the controller, and that information used to activate the system 100. In some embodiments, the sitting position, seat belt engagement, open state of a suite door can be used separately or collectively to determine a phase of flight and therefore activate or deactivate the system 100 based on the determined phase of flight. For example, if a deboarding phase is determined, the controller may activate the at least one indicator to display an indication of an occupied state of a monitored storage compartment. In another embodiment, the at least one sensor may be made active during a landing preparation phase and the alert aspect of the system 100 made active during a taxiing or deboarding phase. In embodiments, the system 100 may be configured to cycle the at least one sensor according to predetermined active and sleep modes for further energy savings.

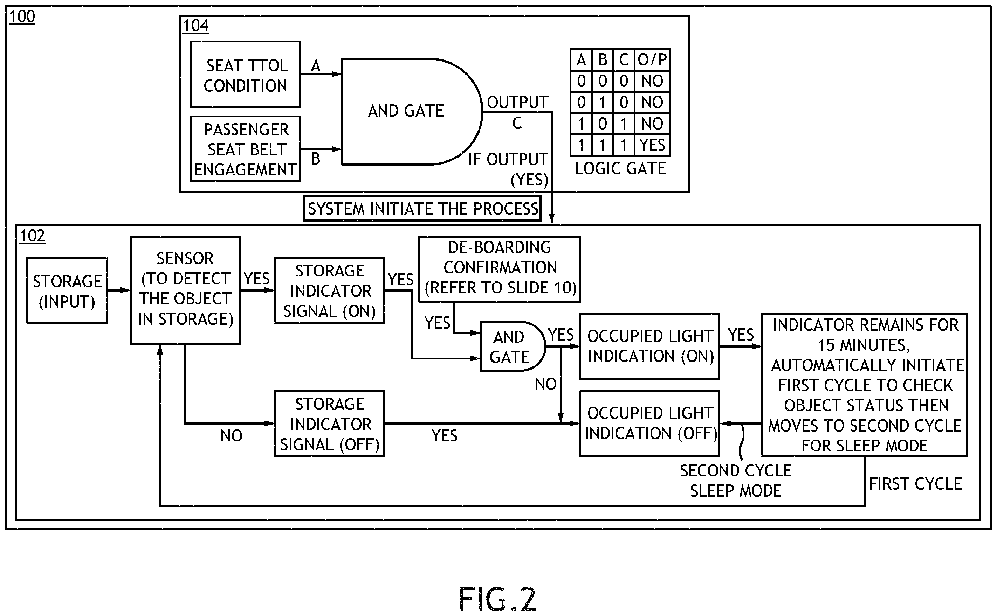

FIG. 2 depicts a block diagram of another version of the system 100 in which a deboarding phase of flight may be confirmed by a different conveyance condition. For example, activation of at least one of the system 100, the at least one sensor, and the at least one indicator may correspond to a state of engagement of a crew member seat belt, an operative state of a fasten seat belt sign, a crew command, deployment of the aircraft landing gear, etc. In embodiments, and in some cases in conjunction with the monitored sitting positioned seat belt engagement status, when one or more of a crew member seat belt is disengaged, the fasten seat belt sign is turned off, a crew commend or announcement is made, the landing gear is deployed, the system 100 or portions therefore can be made active.

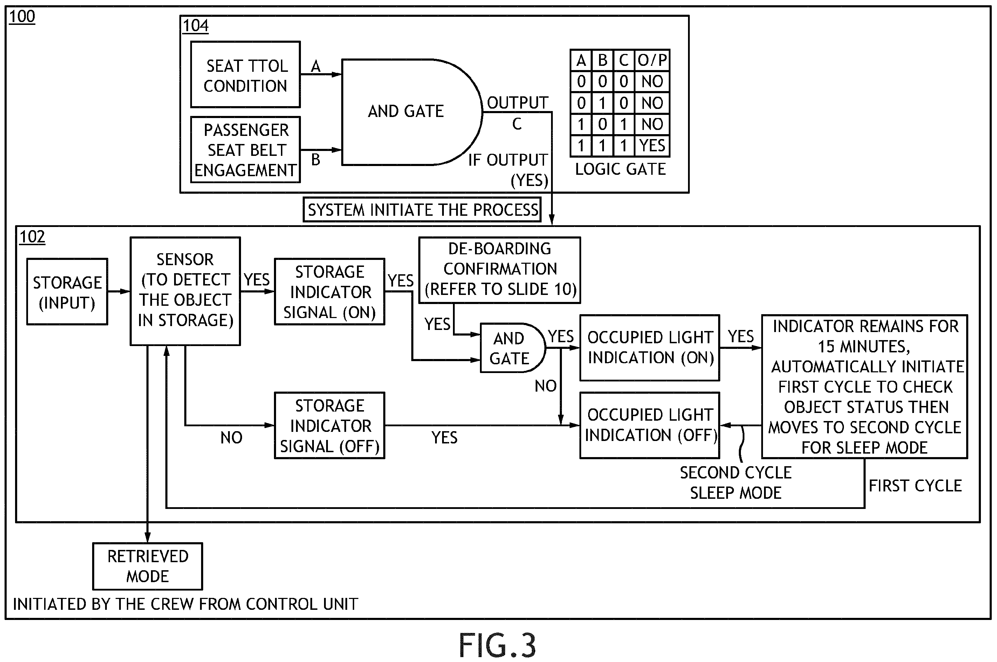

FIG. 3 depicts a block diagram of another version of the system 100 further including a master controller for activating the system 100 or a component thereof on demand. For example, the master controller may be used by the flight crew to selectively activate, by the controller, the at least one sensor, the at least one indicator, or both.

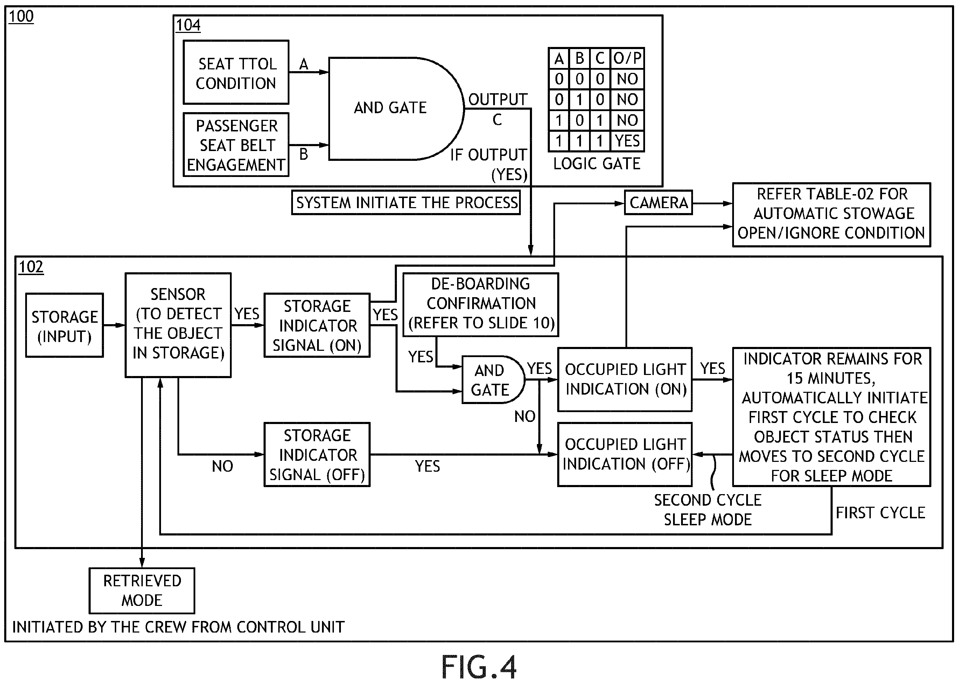

FIG. 4 depicts a block diagram of yet another version of the system 100 in which the controller communicates with external sensors and/or devices to cause automated storage provisions to open, and in some embodiments, those automated storage provisions determined to contain an object.

In some embodiments, the system 100 is customizable. For example, system activation may be based on a landing confirmation sequence that includes passenger seat TTOL mode and seat belt engagement to initiate the sensing signal results, and once the sensing process is completed, the system 100 may wait for final confirmation before providing final outputs to the respective indicators. Conditions for identifying the landing phase/deboarding may include, but are not limited to, confirmation of TTOL seat position and seat belt engagement, wherein the controller activates the at least one indicator when at least one of the following conditions is met: crew member seat belt disengages; fasten seat belt sign turns off; proximity to destination/arrival airport; announcement by the flight crew; altitude; landing gear deployment; manual override; etc. Such conditions may be used alone or in combination.

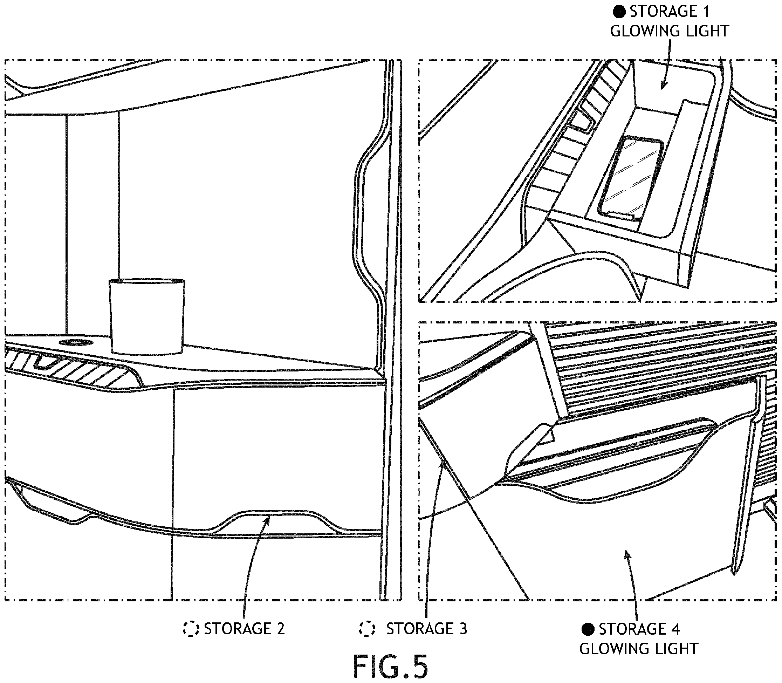

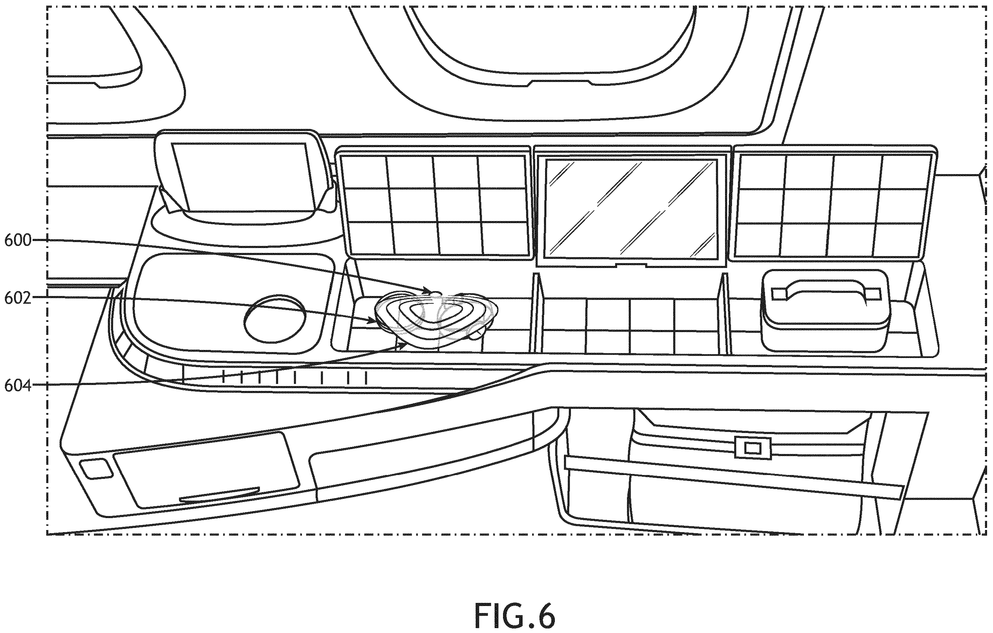

FIG. 5 and 6 depict non-limiting examples of storage provisions that may be found in a conveyance such as in an aircraft passenger cabin associated with a premium class passenger seat. As shown in FIG. 6, an indicator 600 located in a storage provision 602 is communicatively coupled to a sensor 604 for sensing a condition (e.g., weight, proximity, etc.), wherein the indicator 600 is configured to alert the passenger to the occupational state of the respective storage provision 602. Once all personal belongings have been removed from a particular storage provision, the system will operate to confirm on its next sensing cycle the change in occupational state, the controller will receive the updated status, and the controller will cause the indicator to become inactive or change the indication (e.g., light indicates object, no light indicates empty, green light indicates empty, red light indicates object, blinking light indicates object, etc.).

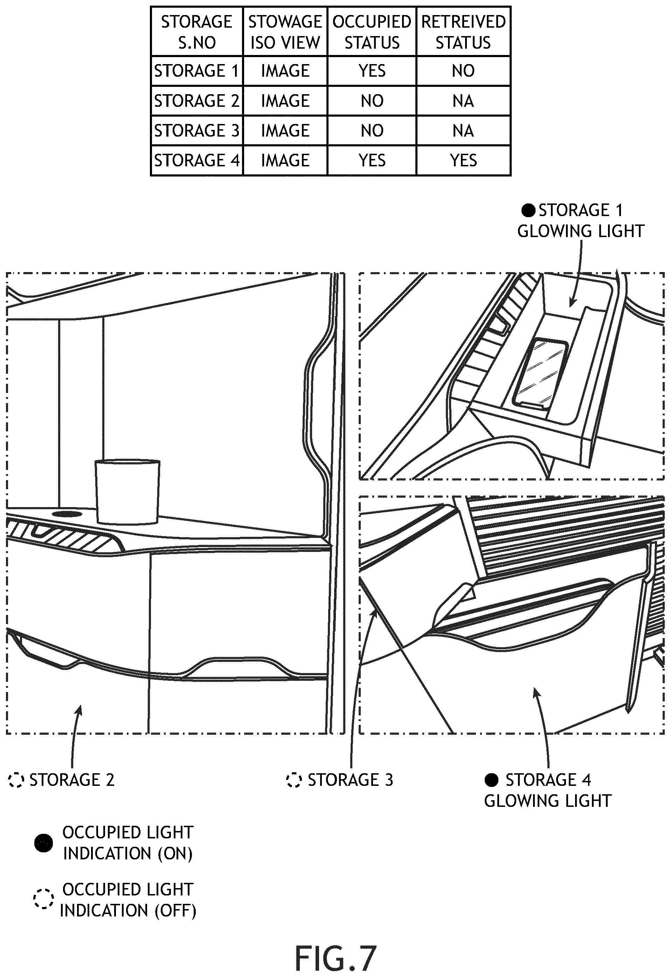

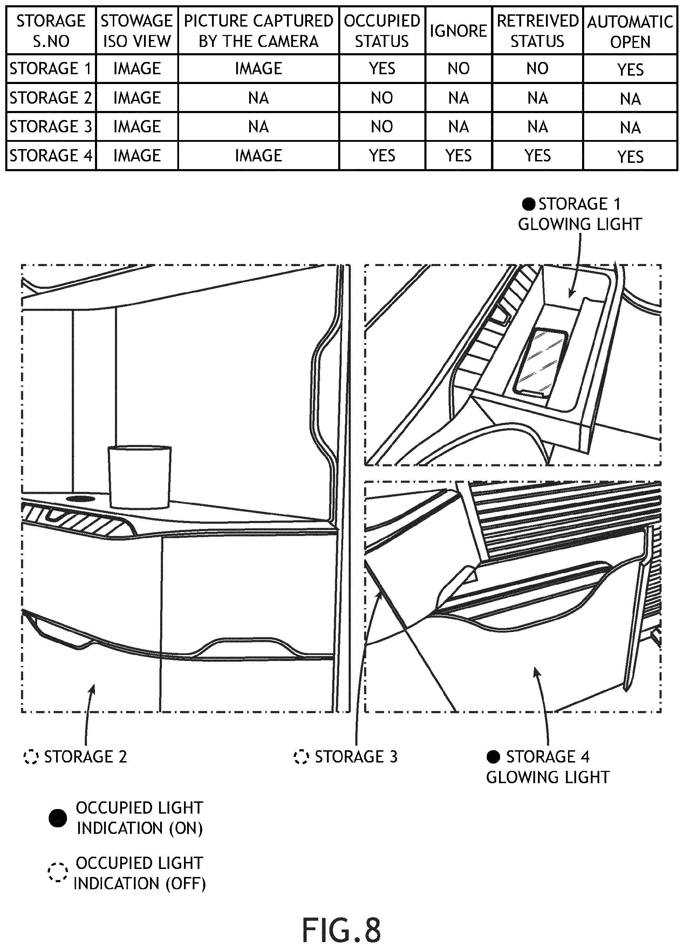

FIGS. 7 and 8 depict displays that may be located in crew areas. FIG. 7 depicts a crew display configured to display the monitored storage provisions, the occupied state of the monitored storage provisions, and the retrieved status of the detected at least one object. FIG. 8 depicts a more sophisticated version of a crew display further configured to display customizable settings, automation capabilities of the monitored storage provisions, and wherein capabilities permit, images of the monitored storage provisions. In embodiments, the displays may be digital devices that, in terms of hardware architecture, include a processor, input/output (I/O) interfaces, a data store, a memory and a display. For example, the displays may include mobile handheld devices, centrally located cabin display devices, wearable devices, etc. The system may include one or more of these device types to ensure that the flight crew is made aware of, by redundant communications to the various devices, the occupational states of the monitored storage provisions in a timely manner to minimize response time delays.

In the embodiments described above, a controller is configured to receive, determine, instruct, execute, etc. The controller may include at least one processor, memory, and a communication interface. The processor provides processing functionality for at least the controller and may include any number of processors, microcontrollers, circuitry, field programmable gate array (FPGA) or other processing systems, and resident or external memory for storing data, executable code, and other information accessed or generated by the controller. The processor may execute one or more software programs embodied in a non-transitory computer readable medium (e.g., memory) that implements techniques described herein. The processor is not limited by the materials from which it is formed, or the processing mechanisms employed therein and, as such, can be implemented via semiconductor(s) and/or transistors (e.g., using electronic integrated circuit (IC) components), and so forth.

The memory may be an example of tangible, computer-readable storage medium that provides storage functionality to store various data and/or program code associated with operation of the processor, such as software programs and/or code segments, or other data to instruct the processor, and possibly other components of the controller, to perform the functionality described herein. Thus, the memory can store data, such as a program of instructions for operating the controller, including its components (e.g., processor, communication interface, etc.), and so forth. It should be noted that while a single memory is described, a wide variety of types and combinations of memory (e.g., tangible, non-transitory memory) may be employed. The memory may be integral with the processor, may comprise stand-alone memory, or may be a combination of both. Some examples of the memory may include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The communication interface may be operatively configured to communicate with components of the controller. For example, the communication interface may be configured to retrieve data from the processor or other devices, transmit data for storage in the memory, retrieve data from storage in the memory, and so forth. The communication interface may also be communicatively coupled with the processor to facilitate data transfer between components of the controller and the processor. It should be noted that while the communication interface is described as a component of the controller, one or more components of the communication interface may be implemented as external components communicatively coupled to the controller via a wired and/or wireless connection. The controller may also include and/or connect to one or more input/output (I/O) devices (e.g., human machine interface (HMI) devices) via the communication interface. In embodiments, the communication interface may include a transmitter, receiver, transceiver, physical connection interface, or any combination thereof.

From the above description, it is clear that the inventive concepts disclosed herein are well adapted to achieve the objectives and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. A system (100) for monitoring at least one storage provision in a seating area in an aircraft, the system comprising:
at least one sensor (604) for sensing at least one object positioned in an interior space of the at least one storage provision (602);
at least one indicator (600) associated with the at least one storage provision; and
a controller (102) communicatively coupled to the at least one sensor, the at least one indicator, and at least one phase of flight controller (104), the controller including processing circuitry configured to:
activate the at least one sensor;
receive object information from the at least one sensor;
receive phase of flight information from the phase of flight controller; and
when the object information pertains to at least one sensed object in the at least one storage provision, and the phase of flight information pertains to landing or deboarding of the aircraft, activate the at least one indicator.

2. The system (100) according to claim 1, wherein the phase of flight controller (104) includes processing circuitry configured to:
determine a sitting position of a passenger seat positioned in the seating area;
determine a fastened state of a seat belt of the passenger seat; and
communicate with the controller to provide deboarding phase of flight information when the sitting position of the passenger seat is determined to be upright and the fastened state of the seat belt is determined to be unfastened after having been fastened in preparation for landing.

3. The system (100) according to claim 1, wherein the phase of flight controller (104) includes processing circuitry configured to:
determine a sitting position of a passenger seat positioned in the seating area;
activate a fasten seat belt sign in preparation for landing; and
communicate with the controller (102) to provide deboarding phase of flight information when the sitting position of the passenger seat is determined to be upright and the fasten seat belt sign is deactivated after having been activated in preparation for landing.

4. The system (100) according to any preceding claim, wherein the phase of flight controller (104) is configured to communicate with the controller (102) when landing gear of the aircraft is deployed to provide landing phase of flight information to the controller.

5. The system (100) according to any preceding claim, wherein the phase of flight controller (104) is configured to communicate with the controller (102) when a crew announcement is made pertaining to landing to provide landing phase of flight information to the controller.

6. The system (100) according to claim 1, wherein the phase of flight controller includes processing circuitry configured to:
determine a sitting position of a passenger seat positioned in the seating area;
determine a fastened state of a seat belt of the passenger seat; and
communicate with the controller (102) to provide landing phase of flight information when the sitting position of the passenger seat is determined to be upright, the seat belt is determined to be fastened, and aircraft altitude is less than a predefined altitude as indicated on a monitor positioned in the seating area.

7. The system (100) according to any preceding claim, wherein the controller (102) is further configured to activate the at least one sensor (604) when the phase of flight information received by the controller pertains to the landing or the deboarding of the aircraft; and/or further comprising a master control switch communicatively coupled to the controller (102) for activating the at least one sensor and the at least one indicator on demand; and/or wherein:
the seating area is a private area in the aircraft;
the at least one storage provision includes at least one of a compartment, a shelf, a drawer, a pocket, and a closet; and
the at least one indicator (602) is positioned proximal to at least one of the at least one storage provision and an entrance of the private seating area.

8. A method for monitoring at least one storage provision in an aircraft, the method comprising the steps of:
providing a system comprising:
at least one sensor (604) for sensing at least one object positioned in an interior space of the at least one storage provision (602);
at least one indicator (600) associated with the at least one storage provision; and
a controller (102) communicatively coupled to the at least one sensor, the at least one indicator, and at least one phase of flight controller (104) of the aircraft, the controller including processing circuitry;
activating, by the controller, the at least one sensor;
receiving, by the controller, object information from the at least one sensor;
receiving, by the controller, phase of flight information from the phase of flight controller of the aircraft; and
when the object information pertains to at least one sensed object in the at least one storage provision, and the phase of flight information pertains to landing or deboarding of the aircraft, activating, by the controller, the at least one indicator.

9. The method according to claim 8, wherein the phase of flight controller (104) includes processing circuitry, and the method further includes the steps of:
determining, by the phase of flight controller, a sitting position of a passenger seat positioned in the seating area;
determining, by the phase of flight controller, a fastened state of a seat belt of the passenger seat; and
communicating, by the phase of flight controller, with the controller (102) to provide deboarding phase of flight information when the sitting position of the passenger seat is determined to be upright and the fastened state of the seat belt is determined to be unfastened after having been fastened in preparation for landing.

10. The method according to claim 8, wherein the phase of flight controller (104) includes processing circuitry, and the method further includes the steps of:
determining, by the phase of flight controller, a sitting position of a passenger seat positioned in the seating area;
activating, by the phase of flight controller, a fasten seat belt sign in preparation for landing; and
communicating, by the phase of flight controller, with the controller to provide deboarding phase of flight information when the sitting position of the passenger seat is determined to be upright and the fasten seat belt sign is deactivated after having been activated in preparation for landing.

11. The method according to claim 8, 9 or 10, wherein the phase of flight controller (104) is configured to communicate with the controller (102) when landing gear of the aircraft is deployed to provide landing phase of flight information to the controller.

12. The method according to claim 8, 9, 10 or 11, wherein the phase of flight controller (104) is configured to communicate with the controller (102) when a crew announcement is made pertaining to landing to provide landing phase of flight information to the controller.

13. The method according to claim 8, wherein the phase of flight controller (104) includes processing circuitry, and the method further comprises the steps of:
determining, by the phase of flight controller, a sitting position of a passenger seat positioned in the seating area;
determining, by the phase of flight controller, a fastened state of a seat belt of the passenger seat; and
communicating, by the phase of flight controller, with the controller (102) to provide landing phase of flight information when the sitting position of the passenger seat is determined to be upright, the seat belt is determined to be fastened, and aircraft altitude is less than a predefined altitude as indicated on a monitor positioned in the seating area.

14. The method according to claim 8, 9, 10, 11, 12 or 13, wherein the method further comprises the step of, by the controller (102), activating the at least one sensor (604) when the phase of flight information received by the controller pertains to the landing or the deboarding of the aircraft; and/or wherein the method further comprises the step of, by a master control switch communicatively coupled with the controller, activating the at least one sensor and the at least one indicator on demand.

15. The method according to claim 8, 9, 10, 11, 12, 13 or 14, wherein:
the seating area is a private area in the aircraft;
the at least one storage provision includes at least one of a compartment, a shelf, a drawer, a pocket, and a closet; and
the at least one indicator is positioned proximal to at least one of the at least one storage provision and an entrance of the private seating area.
